# EUROPÄISCHE PATENTANMELDUNG

(11) **EP 3 664 416 A1**
(43) Veröffentlichungstag der Anmeldung: **10.06.2020**
(21) Anmeldenummer: 18210377.0
(22) Anmeldetag: 05.12.2018
(51) Int. Cl.: H04L 29/08, H04W 4/80

(54) **VERFAHREN ZUM BETREIBEN EINES SYSTEMS UND SYSTEM**

(71) Anmelder: Hilti Aktiengesellschaft, 9494 Schaan (LI)
(72) Erfinder: Balter, Marco, 6800 Feldkirch (AT); Sattler, Christian, 87640 Biessenhofen (DE)
(74) Vertreter: Hilti Aktiengesellschaft Corporate Intellectual Property

(57) **Zusammenfassung**

Es wird ein Verfahren zum Betreiben eines Systems (1) beschrieben, wobei eine Hauptwerkzeugmaschine (5), wenigstens ein Hilfsgerät (10, 25, 35) und ein mobiles Gerät (45) jeweils mit einer Sende- und Empfangseinrichtung (3, 13, 28, 38, 46) ausgeführt sind. Das Verfahren umfasst folgende Schritte:
- Auswählen der Hauptwerkzeugmaschine (5) als Master in einem Netzwerk;
- Auswählen des wenigstens einen Hilfsgeräts (10, 25, 35) als Slave in dem Netzwerk;
- Senden wenigstens eines Signals von dem wenigstens einen Hilfsgerät (10, 25, 35) an die Hauptwerkzeugmaschine (5);
- Einstellen wenigstens eines Parameters in Abhängigkeit des wenigstens einen empfangenen Signals;
- Senden wenigstens eines weiteren Signals von dem mobilen Gerät (45) an die Hauptwerkzeugmaschine (5); und
- Einstellen wenigstens eines Parameters der Hauptwerkzeugmaschine (5) und/oder wenigstens eines Hilfsgeräts (10, 25, 35) in Abhängigkeit des weiteren Signals von dem mobilen Gerät (45). Es wird weiterhin ein System (1) zur Durchführung eines derartigen Verfahrens beschrieben.

## Beschreibung

Die vorliegende Erfindung betrifft ein Verfahren zum Betreiben eines eine Hauptwerkzeugmaschine, wenigstens ein Hilfsgerät und ein mobiles Gerät umfassenden Systems gemäß Patentanspruch 1. Weiterhin betrifft die Erfindung ein System zur Durchführung eines derartigen Verfahrens gemäß Patentanspruch 3.

Aus der Praxis sind Kernbohrmaschinen bekannt, welche in Kombination mit einem beispielsweise als Bohrkrone ausgeführten Bohrwerkzeug zur Herstellung von Bohrungen in beispielsweise mineralischen Materialien, wie z. B. Beton, Ziegelwerk oder dergleichen ausgebildet sind. Zur Unterstützung eines Kernbohrvorgangs können mehrere Hilfsgeräte vorgesehen sein. Beispielsweise kann ein Maschinenständer zur Halterung der Kernbohrmaschine, eine Vorschubeinrichtung zur Verlagerung der Kernbohrmaschine entlang des Maschinenständers, eine Wassermanagementeinrichtung zur Sicherstellung einer Wasserversorgung während eines Bohrvorgangs und eine Unterdruckpumpe zur Erzeugung eines Unterdrucks, mittels welchem der Maschinenständer an einem Untergrund festlegbar ist, zum Einsatz kommen. Verschiedene Hilfsgeräte und die Hauptwerkzeugmaschine, nämlich die Kernbohrmaschine, sind durch verschiedene Parameter gekennzeichnet bzw. stellen jeweils einen spezifischen Dienst, wie beispielsweise eine Ermittlung einer Temperatur mittels eines Temperatursensors, bereit. Mittels eines mobilen Geräts, beispielsweise eines Mobiltelefons, wird eine Verbindung zu der Kernbohrmaschine und den Hilfsgeräten aufgebaut, wobei das mobile Gerät als Master und die Kernbohrmaschine und die Hilfsgeräte als Slaves in einem hierbei erstellten Netzwerk fungieren.

Eine derartige Topologie ist nachteilhafterweise starr, wobei insbesondere eine Kommunikation der Kernbohrmaschine mit den Hilfsgeräten ohne das mobile Gerät nicht möglich ist.

Es ist Aufgabe der vorliegenden Erfindung, ein Verfahren zum Betreiben eines eine Hauptwerkzeugmaschine, wenigstens ein Hilfsgerät und ein mobiles Gerät umfassenden Systems und ein System zur Durchführung eines derartigen Verfahrens bereitzustellen, wobei das System eine große Flexibilität aufweist.

Die Aufgabe wird mit einem Verfahren zum Betreiben eines eine Hauptwerkzeugmaschine, wenigstens ein Hilfsgerät und ein mobiles Gerät umfassenden Systems, wobei die Hauptwerkzeugmaschine, das wenigstens eine Hilfsgerät und das mobile Gerät jeweils mit einer Sendeeinrichtung und einer Empfangseinrichtung ausgeführt sind, und wobei eine Steuereinrichtung vorgesehen ist, dadurch gelöst, dass das Verfahren folgende Schritte umfasst:
- Auswählen der Hauptwerkzeugmaschine als Master in einem die Hauptwerkzeugmaschine und das wenigstens eine Hilfsgerät umfassenden Netzwerks;
- Auswählen des wenigstens einen Hilfsgeräts als Slave in dem Netzwerk;
- Senden wenigstens eines Signals von dem wenigstens einen Hilfsgerät an die Hauptwerkzeugmaschine;
- Einstellen wenigstens eines Parameters der Hauptwerkzeugmaschine in Abhängigkeit des wenigstens einen von dem wenigstens einen Hilfsgerät empfangenen Signals und/oder
- Einstellen wenigstens eines Parameters wenigstens eines Hilfsgeräts in Abhängigkeit des wenigstens einen von diesem Hilfsgerät empfangenen Signals und/oder
- Einstellen wenigstens eines Parameters wenigstens eines Hilfsgeräts in Abhängigkeit des wenigstens einen von einem anderen Hilfsgerät empfangenen Signals;
- Senden wenigstens eines weiteren Signals von dem mobilen Gerät an die Hauptwerkzeugmaschine; und
- Einstellen wenigstens eines Parameters der Hauptwerkzeugmaschine und/oder wenigstens eines Hilfsgeräts in Abhängigkeit des weiteren Signals von dem mobilen Gerät.

Mit dem erfindungsgemäßen Verfahren ist auf einfache Weise ein Netzwerk eines Systems geschaffen, das eine große Flexibilität aufweist. Bei einem derartigen Netzwerk ist eine Kommunikation der Hauptwerkzeugmaschine mit dem wenigstens einen Hilfsgerät auch ohne ein Eingriff eines mobilen Geräts ermöglicht. Ein Netzwerk wird dabei von der Hauptwerkzeugmaschine und dem wenigstens einen Hilfsgerät gebildet, wobei die Hauptwerkzeugmaschine als Master und sämtliche Hilfsgeräte als Slave in dem Netzwerk ausgewählt werden.

Mittels der Steuereinrichtung bzw. der Steuer- und Regeleinrichtung der Hauptwerkzeugmaschine können in Abhängigkeit der empfangenen Signale Parameter der Hauptwerkzeugmaschine und der Hilfsgeräte eingestellt werden, wobei die Hauptwerkzeugmaschine hierzu insbesondere ein Signal an das entsprechende Hilfsgerät oder die entsprechenden Hilfsgeräte sendet.

Mittels des mobilen Geräts können die insbesondere in der Hauptwerkzeugmaschine vorgegebenen Vorgehensweisen auf einfache Weise modifiziert werden, indem durch anwenderseitige Betätigung des mobilen Geräts gewünschte Parameter der Hauptwerkzeugmaschine und/oder wenigstens eines Hilfsgeräts vorgegeben und an der Hauptwerkzeugmaschine und/oder wenigstens einem Hilfsgerät eingestellt werden. Hierdurch kann auf einfache Weise von in der Hauptwerkzeugmaschine hinterlegten Vorgehensweisen abgewichen werden und diese überschrieben werden. Über das mobile Gerät kann somit auf Dienste des Netzwerks zugegriffen werden. Durch das mobile Gerät ist das System einfach aus der Ferne bedienbar, beispielsweise an- oder ausschaltbar oder notausschaltbar, so dass ein Benutzer sich nicht in einem Arbeitsbereich aufhalten muss und eine Schmutz- und Lärmbelastung des Benutzers reduzierbar ist.

Die Hauptwerkzeugmaschine fungiert somit gegenüber den Hilfsgeräten als Master in dem Netzwerk und gegenüber dem mobilen Gerät vorzugsweise als Slave.

Bei einer vorteilhaften Ausführungsform eines Verfahrens nach der Erfindung wird das wenigstens eine Signal und/oder das wenigstens eine weitere Signal in einer Speichereinrichtung zumindest temporär gespeichert. Hierdurch wird eine Auswertung der in der Speichereinrichtung hinterlegten Daten ermöglicht.

Es wird weiterhin ein System zur Durchführung eines derartigen Verfahrens vorgeschlagen, umfassend eine Hauptwerkzeugmaschine, wenigstens ein Hilfsgerät und ein mobiles Gerät, wobei die Hauptwerkzeugmaschine, das wenigstens eine Hilfsgerät und das mobile Gerät jeweils mit einer Sendeeinrichtung und einer Empfangseinrichtung ausgeführt sind, und wobei eine vorzugsweise der Hauptwerkzeugmaschine zugeordnete Steuereinrichtung vorgesehen ist.

Mit einem erfindungsgemäß ausgeführten System ist ein Netzwerk aufbaubar, das eine große Flexibilität aufweist. In dem die Hauptwerkzeugmaschine und das wenigstens eine Hilfsgerät umfassenden Netzwerk, in dem die Hauptwerkzeugmaschine als Master und sämtliche Hilfsgeräte als Slave ausgewählt sind, ist eine Kommunikation der Hauptwerkzeugmaschine mit dem wenigstens einen Hilfsgerät vorteilhafterweise auch ohne ein mobiles Gerät möglich. Mittels der Hauptwerkzeugmaschine können in Abhängigkeit von empfangenen Signalen Parameter der Hauptwerkzeugmaschine und der Hilfsgeräte eingestellt werden, wobei die Hauptwerkzeugmaschine hierzu insbesondere ein Signal an das entsprechende Hilfsgerät oder die entsprechenden Hilfsgeräte sendet.

Mittels des mobilen Geräts können die insbesondere in der Hauptwerkzeugmaschine vorgegebenen Vorgehensweisen auf einfache Weise modifiziert werden, indem durch anwenderseitige Betätigung des mobilen Geräts gewünschte Parameter der Hauptwerkzeugmaschine und/oder wenigstens eines Hilfsgeräts vorgegeben und an der Hauptwerkzeugmaschine und/oder wenigstens einem Hilfsgerät eingestellt werden. Hierdurch kann auf einfache Weise von in der Hauptwerkzeugmaschine hinterlegten Vorgehensweisen abgewichen werden und diese überschrieben werden. Über das mobile Gerät kann somit auf Dienste des Netzwerks zugegriffen werden.

Um eine Kommunikation zwischen der Hauptwerkzeugmaschine, dem wenigstens einen Hilfsgerät und/oder dem mobilen Gerät besonders einfach und flexibel durchführen zu können, sind die Sende- und Empfangseinrichtungen der Hauptwerkzeugmaschine, des wenigstens einen Hilfsgeräts und/oder des mobilen Geräts bei einer vorteilhaften Ausführung der Erfindung Teil einer drahtlosen oder drahtgebundenen Übertragungseinrichtung.

Bei einer vorteilhaften Ausführung der Erfindung ist die drahtlose Übertragungseinrichtung eine optische Übertragungseinrichtung oder eine Funkübertragungseinrichtung. Die Übertragungseinrichtung kann dabei auf verschiedenen Funktionsprinzipien und/oder Standards basieren. Die Funktionsweise der Übertragungseinrichtung kann auf einer Signalübertragung im Radiofrequenzbereich beispielsweise mittels Ultrakurzwelle, Kurzwelle oder Mittelwelle oder auf einer Signalübertragung im infraroten oder optischen Frequenzbereich basieren. Insbesondere ist die Übertragungseinrichtung als RFID-Übertragungseinrichtung, als Bluetooth-Übertragungseinrichtung, als Bluetooth Low Energy (BLE)-Übertragungseinrichtung, als NFC-Übertragungseinrichtung, als WiFi-Übertragungseinrichtung, als QR-Übertragungseinrichtung oder als DMC-Übertragungseinrichtung ausgeführt. Weiterhin kann die Übertragungseinrichtung als WLAN-Übertragungseinrichtung, als ZigBee-Übertragungseinrichtung, als Wibree-Übertragungseinrichtung, WiMAX-Übertragungseinrichtung, als LoRa-Übertragungseinrichtung, als IrDA-Übertragungseinrichtung oder als nach optischem Richtfunk arbeitende Übertragungseinrichtung ausgeführt sein.

Die Hauptwerkzeugmaschine ist bei einer vorteilhaften Ausführung der Erfindung eine Kernbohrwerkzeugmaschine oder eine Wandsägemaschine, wobei ein Hilfsgerät eine Vorschubeinrichtung für die Hauptwerkzeugmaschine, eine Unterdruckpumpe, eine Saugeinrichtung und/oder eine Wassermanagementeinrichtung sein kann.

Das mobile Gerät ist vorzugsweise als eine Fernsteuereinrichtung oder ein Mobiltelefon ausgeführt, mittels welchem auf einfache Weise ein Signal an die Hauptwerkzeugmaschine übertragbar ist.

Bei dem von der Hauptwerkzeugmaschine einstellbaren Parameter kann es sich beispielsweise um einen Aktivierungszustand eines Geräts des Systems, eine Drehzahl, ein Drehmoment oder einen aktuellen Gang einer Getriebeeinrichtung der Hauptwerkzeugmaschine, eine durch die Vorschubeinrichtung erzielte Anpresskraft der Hauptwerkzeugmaschine, eine Vorschubgeschwindigkeit der Vorschubeinrichtung, einen von der Wassermanagementeinrichtung zu der Hauptwerkzeugmaschine geführten Wasservolumenstrom, einen Füllstand eines Wassertanks der Wassermanagementeinrichtung, eine Saugleistung einer Saugeinrichtung, einen durch die Saugeinrichtung erzielbaren Unterdruck oder einen Füllstand der Saugeinrichtung handeln, wobei mittels der Saugeinrichtung insbesondere während eines Bearbeitungsvorgangs im Bereich der Hauptwerkzeugmaschine entstehendes Bearbeitungsmaterial absaugbar ist.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine vereinfachte Darstellung eines eine Kernbohrmaschine, einen Bohrständer, eine Vorschubeinrichtung, eine Wassermanagementeinrichtung, eine Saugeinrichtung und ein Mobiltelefon aufweisenden Systems; und
- Fig. 2: eine vereinfachte Darstellung eines Ablaufdiagramms einer Ausführungsform eines erfindungsgemäßen Verfahrens zum Betreiben des Systems gemäß Fig. 1.

### Ausführungsbeispiel:

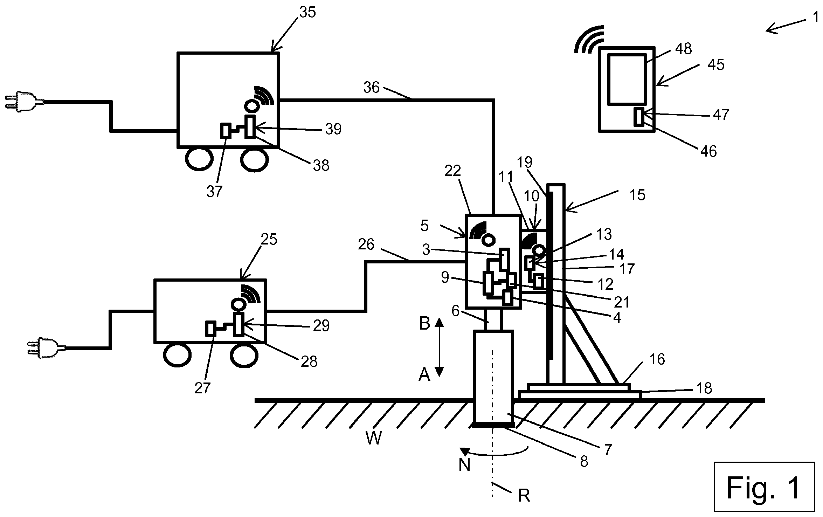

Fig. 1 zeigt ein erfindungsgemäß ausgeführtes System 1 umfassend eine als Kernbohrmaschine ausgeführte Hauptwerkzeugmaschine 5. Die Kernbohrmaschine 5 ist zum Schneiden von Löchern in harte Werkstoffe W, wie beispielsweise Beton, Zement, Ziegelwerk oder dergleichen ausgeführt.

Das System 1 weist weiterhin ein als Vorschubeinrichtung 10 bzw. Antriebseinrichtung ausgeführtes Hilfsgerät auf, mittels welcher die Kernbohrmaschine 5 mit einem Bohrständer 15 beweglich verbunden ist. Der Bohrständer 15 weist im Wesentlichen eine Fußeinrichtung 16 sowie eine als Führungsschiene 17 ausgeführte Führungseinrichtung auf. Wie in Fig. 1 gezeigt kann die Fußeinrichtung 16 waagerecht auf einen zu bearbeitenden Untergrund W befestigt werden. Alternativ hierzu kann die Fußeinrichtung 16 auch an schräg stehenden oder insbesondere senkrecht verlaufenden Untergründen angeordnet werden.

Die Befestigung der Fußeinrichtung 16 an dem Untergrund W kann dabei mittels Schrauben oder einer Verspannung erfolgen. Vorliegend weist der Bohrständer 15 im Bereich der Fußeinrichtung 16 eine Festlegungseinrichtung 18 in Form eines Unterdruckrings auf. Die Festlegungseinrichtung 18 ist beispielsweise mit einer nicht näher ersichtlichen Unterdruckeinrichtung verbunden, mittels welcher ein Ringraum der Festlegungseinrichtung 18 vakuumierbar ist, so dass der Bohrständer 15 durch den im Bereich des Ringraums vorliegenden Unterdruck sicher an dem Untergrund W gehalten ist.

Die Führungsschiene 17 erstreckt sich hier im Wesentlichen in einem 90°-Winkel zu der Fußeinrichtung 16 bzw. zu dem Untergrund W. Alternativ hierzu kann die Führungsschiene 17 auch in einem Winkel größer oder kleiner als 90° gegenüber der Fußeinrichtung 16 bzw. Untergrund W mit der Fußeinrichtung 16 verbunden sein.

Des Weiteren weist die Führungsschiene 17 an einer Seite eine Zahnstangeneinrichtung 19 auf, die sich über einen großen Teil der Länge der Führungsschiene 17 und insbesondere im Wesentlichen über die gesamte Länge der Führungsschiene 17 erstreckt.

Wie bereits vorstehend erwähnt, ist die Vorschubeinrichtung 10 zwischen der Kernbohrmaschine 5 und dem Bohrständer 15 positioniert. Mit Hilfe der Vorschubeinrichtung 10 kann die Kernbohrmaschine 5 entlang der Führungsschiene 17 des Bohrständers 15 bewegt werden. In Bezug auf das in Fig. 1 dargestellte Ausführungsbeispiel kann die Kernbohrmaschine 5 reversibel in Pfeilrichtung A oder B bewegt werden. Die Vorschubeinrichtung 10 verfügt hierzu über eine in Fig. 1 nicht dargestellte erste Befestigungseinrichtung, mit der die Kernbohrmaschine 5 an einem Gehäuse 11 der Vorschubeinrichtung 10 lösbar anbindbar ist. Darüber hinaus weist die Vorschubeinrichtung 10 noch eine zweite, in Fig. 1 ebenfalls nicht ersichtliche Befestigungseinrichtung, mit der das Gehäuse 11 der Vorschubeinrichtung 10 mit der Führungsschiene 17 des Bohrständers 15 verbindbar ist. Die zweite Befestigungseinrichtung weist hierzu eine nicht gezeigte Halteeinheit und eine ebenfalls nicht gezeigte Zahnradeinheit auf. Mit Hilfe der Halteeinheit ist die Vorschubeinrichtung 10 an der Führungsschiene 17 gehalten. Das entsprechend ausgestaltete Zahnrad greift in die Zahnstangenvorrichtung ein und führt dadurch die Vorschubeinrichtung 10 entlang der Führungsschiene 17. Um die Zahnradeinheit in eine Drehbewegung zu versetzen, besitzt die Vorschubeinrichtung 10 weiterhin einen Antrieb. Bei dem Antrieb kann es sich um einen Elektromotor samt Getriebe- bzw. Übersetzungseinheit handeln. Bei dem Elektromotor kann es sich beispielsweise um einen Universalmotor handeln. Es sind jedoch auch andere geeignete Elektromotoren möglich. Weder der Antrieb noch die Getriebe- bzw. Übersetzungseinheit sind in den Figuren dargestellt.

Die Vorschubeinrichtung 10 enthält des Weiteren eine Regel- und Steuerungseinrichtung, mit der Bewegungsparameter wie die Geschwindigkeit, Wegstrecke, Bewegungsstart- und Bewegungsendpunkt sowie andere Parameter, der Vorschubeinrichtung 10 relativ zu dem Bohrständer 15 geregelt bzw. gesteuert werden können.

Die als Kernbohrmaschine 5 ausgestaltete Hauptwerkzeugmaschine enthält im Wesentlichen ein Gehäuse 22, eine Antriebseinheit, ein Getriebe, eine Steuer- und Regeleinrichtung 9, eine Antriebswelle und eine Abtriebswelle 6. Die Steuer- und Regeleinrichtung 9 enthält einen Regler zum Regeln und Steuern des Motorstroms. Die Antriebseinheit, das Getriebe und die Antriebswelle sind in den Figuren nicht dargestellt.

An der Abtriebswelle 6 ist ein Bohrwerkzeug 7 in Gestalt einer Bohrkrone angeschlossen. Die Bohrkrone 7 weist an einem freien Ende eine Schneidekante 8 auf, mit der der zu bearbeitende Werkstoff geschnitten werden kann, um ein Bohrloch zu erzeugen. Die als Elektromotor ausgestaltete Antriebseinheit versetzt die Bohrkrone 7 hierzu in eine Drehbewegung in Richtung N. Sowohl die Bohrkrone 7 als auch die Abtriebswelle 6 drehen sich um die gemeinsame Drehachse R. Die Steuer- und Regeleinrichtung 9 dient zum Steuern bzw. Regeln der als Elektromotor ausgeführten Antriebseinheit. Hierbei wird insbesondere die Drehzahl des Elektromotors gesteuert bzw. geregelt. Darüber hinaus kann entsprechend der jeweiligen Situation des Bohrvorgangs ein bestimmter Modus eingestellt werden.

Zur Durchführung des eigentlichen Bohrvorgangs wird die Kernbohrmaschine 5 mit der daran angeschlossenen Bohrkrone 7 mittels des Bohrständers 15 an dem zu bearbeitenden Werkstoff W positioniert und befestigt.

Mit Hilfe der Steuer- und Regeleinrichtung 9 wird an dem Getriebe der Kernbohrmaschine 5 ein Gang ausgewählt und entsprechend eingelegt. Der zu wählende Gang wird anhand des Durchmessers der verwendeten Bohrkrone 7 bestimmt. Durch den gewählten Gang wird entsprechend die Drehzahl des Elektromotors festgelegt, mit der dieser drehen soll. Das Getriebe und insbesondere der gewählte Gang des Getriebes lassen die Bohrkrone 7 in einer entsprechenden Drehzahl, mit einem entsprechenden Drehmoment und einer entsprechenden Anpresskraft drehen. Bei einer alternativen Ausführung kann es auch vorgesehen sein, dass der zu wählende Gang manuell einlegbar ist. Alternativ hierzu können beispielsweise die Parameter Drehzahl, Drehmoment und Anpresskraft auch in Abhängigkeit weiterer Kriterien, wie beispielsweise einem manuell wählbaren Betriebsmodus, beispielsweise einem Economy Modus oder einem High-Performance Modus, oder in Abhängigkeit des vorliegenden Untergrunds gewählt werden.

Es kann dabei vorgesehen sein, dass ein Durchmesser der Bohrkrone 7 automatisiert erfasst und die Information beispielsweise mittels einer insbesondere drahtlosen Übertragungseinrichtung an die Kernbohrmaschine 5 übertragen wird, wodurch Parameter der Geräte des Systems 1, wie beispielsweise eine Wasserzuführmenge oder eine Anpresskraft, in Abhängigkeit des ermittelten Durchmessers der Bohrkrone 7 angepasst werden können.

Als nächstes wird ein Ein- und Ausschalter an der Kernbohrmaschine 5 betätigt. Der Ein- und Ausschalter ist Bestandteil der Steuer- und Regeleinrichtung 9 und in den Figuren nicht dargestellt. Nach dem Betätigen des Ein- und Ausschalters beginnt sich die Bohrkrone 7 in Richtung N zu drehen. Die Bohrkrone 7 und insbesondere die Schneidekante 8 der Bohrkrone 7 befinden sich zu Beginn des Bohrvorgangs noch (in Pfeilrichtung B) über dem Werkstoff W. Die Position der Bohrkrone 7 über dem Werkstoff W ist in den Figuren nicht dargestellt.

Zu Beginn des Bohrvorgangs wird die Kernbohrmaschine 5 mit der sich drehenden Bohrkrone 7 mittels der Vorschubeinrichtung 10 entlang der Führungsschiene 17 des Bohrständers 15 auf den Werkstoff W zubewegt (Pfeilrichtung A in Fig. 1).

Sobald die Schneidekante 8 der Bohrkrone 7 Kontakt mit der Oberfläche des Werkstoffs W hat, wird die Bohrkrone 7 mit einer relativ geringen Anpresskraft auf den Werkstoff W gedrückt (Pfeilrichtung A), um eine erste Führungsrinne in die Oberfläche des Werkstoffs W zu schneiden. Die Anpresskraft wird durch die Vorschubeinrichtung 10 erzeugt und mittels der Regel- und Steuerungseinrichtung der Vorschubeinrichtung 10 geregelt bzw. gesteuert. Beispielsweise beträgt die Tiefe in Pfeilrichtung A ungefähr zwischen 2 bis 5 mm. Eine relativ niedrige Anpresskraft ist dabei notwendig, da ansonsten durch den hohen Widerstand des harten Werkstoffs W die Drehzahl der Bohrkrone 7 zu stark abfällt bzw. die Bohrkrone 7 auch vollständig zum Stillstand kommen kann. Mit einer zu niedrigen Drehzahl reduziert sich entsprechend auch die Leistung der Bohrkrone 7, d.h. insbesondere die Schneideleistung der Bohrkrone 7 in dem Werkstoff W, wodurch kein genügender Bohrfortschritt mehr erreicht werden kann.

Die als Kernbohrmaschine ausgestaltete Kernbohrmaschine 5 enthält des Weiteren eine Anzahl Sensoren 4, welche die Parameter der Kernbohrmaschine 5 messen. Durch die Sensoren 4 werden beispielsweise eine aktuell vorliegende Drehzahl und/oder ein aktuelles Drehmoment der Abtriebswelle 6 sowie der Bohrkrone 7 gemessen und/oder ein aktueller Gang des Getriebes ermittelt. Weiterhin ist durch einen Sensor 4 ein Zustand der Kernbohrmaschine 5 ermittelbar und feststellbar, ob die Kernbohrmaschine 5 aktiviert oder deaktiviert ist. Die von den Sensoren 4 ermittelten Messwerte werden zur Auswertung an die Steuer- und Regeleinrichtung 9 der Kernbohrmaschine 1 geleitet.

Ebenso weist die Vorschubeinrichtung 10 Sensoren 12 auf, die Parameter der Vorschubeinrichtung 10, wie beispielsweise eine Vorschubgeschwindigkeit und eine Anpresskraft, messen. Weiterhin ist durch einen Sensor 12 ein Zustand der Vorschubeinrichtung 10 ermittelbar und feststellbar, ob die Vorschubeinrichtung 10 aktiviert oder deaktiviert ist. Die Sensoren 12 übermitteln die Parameter an eine Sende- und Empfangseinrichtung 13 der Vorschubeinrichtung 10, welche Teil einer drahtlosen Übertragungseinrichtung 14 ist. Mittels der Sende- und Empfangseinrichtung 13 sind die Parameter kennzeichnende Signale an eine Sende- und Empfangseinrichtung 3 der Kernbohrmaschine 5 übermittelbar, über welche die Signale der Steuer- und Regeleinrichtung 9 zuführbar sind.

In Fig. 1 ist weiterhin ein als Wassermanagementeinrichtung 25 ausgeführtes Hilfsgerät des Systems 1 ersichtlich, welches mittels eines Schlauches 26 mit der Kernbohrmaschine 5 verbunden ist. Die Wassermanagementeinrichtung 25 versorgt die Kernbohrmaschine 5 in gewünschtem Umfang während eines Bohrvorgangs mit Wasser, wobei das Wasser in einen Bohrbereich geführt wird. Die Wassermanagementeinrichtung 25 umfasst vorzugsweise sowohl einen Staub- als auch einen Wassersauger und zusätzlich eine Wasserpumpe. Die Wassermanagementeinrichtung 25 weist Sensoren 27 auf, die Parameter der Wassermanagementeinrichtung 25, wie beispielsweise einen Aktivierungszustand der Wassermanagementeinrichtung 25 und/oder einen durch den Schlauch 26 geführten Wasservolumenstrom und/oder eine Pumpleistung der Wassermanagementeinrichtung 25, messen bzw. ermitteln. Die Sensoren 27 übermitteln die Parameter an eine der Wassermanagementeinrichtung 25 zugeordnete Sende- und Empfangseinrichtung 28, welche Teil einer drahtlosen Übertragungseinrichtung 29 ist. Mittels der Sende- und Empfangseinrichtung 28 der Wassermanagementeinrichtung 25 sind die Parameter kennzeichnenden Signale an die Sende- und Empfangseinrichtung 3 der Kernbohrmaschine 5 übermittelbar, über welche die Signale der Steuer- und Regeleinrichtung 9 zuführbar sind.

Das System 1 weist weiterhin ein als Saugeinrichtung 35 ausgeführtes Hilfsgerät auf, welches mittels eines Schlauches 36 mit der Kernbohrmaschine 5 verbunden ist. Mittels der Saugeinrichtung 35 sind während eines Kernbohrvorgangs auftretende Abfallprodukte über den Schlauch 36 aus einem Arbeitsbereich des Bohrwerkzeugs 7 abführbar, so dass der Bohrvorgang durch diese nicht behindert wird. Die Saugeinrichtung 35 weist Sensoren 37 auf, die Parameter der Saugeinrichtung 35, wie beispielsweise einen Aktivierungszustand der Saugeinrichtung 35 und/oder eine Saugleistung der Saugeinrichtung 35, messen bzw. ermitteln. Die Sensoren 37 übermitteln die Parameter an eine der Saugeinrichtung 35 zugeordnete Sende- und Empfangseinrichtung 38, welche Teil einer drahtlosen Übertragungseinrichtung 39 ist. Mittels der Sende- und Empfangseinrichtung 38 der Saugeinrichtung 35 sind die Parameter kennzeichnenden Signale an die Sende- und Empfangseinrichtung 3 der Kernbohrmaschine 5 übermittelbar, über welche die Signale der Steuer- und Regeleinrichtung 9 zuführbar sind.

Neben den Hilfsgeräten 10, 25 und 35 weist das System ein als Mobiltelefon 45 ausgeführtes mobiles Gerät auf, welches eine Benutzerschnittstelle 48, ein sogenanntes Man-Machine-Interface (MMI) für anwenderseitige Eingaben, aufweist. Das Mobiltelefon 45 weist weiterhin eine Sende- und Empfangseinrichtung 46 auf, welches Teil einer drahtlosen Übertragungseinrichtung 47 ist. Mittels der Übertragungseinrichtung 47 sind über die Benutzerschnittstelle 48 gemachte Eingaben als weitere Signale von dem Mobiltelefon 45 an die Steuer- und Regeleinrichtung 9 der Kernbohrmaschine 5 übermittelbar.

Neben dem Mobiltelefon 45 kann auch die Kernbohrmaschine 5 eine Benutzerschnittstelle für anwenderseitige Eingaben aufweisen.

Die Übertragungseinrichtungen 14, 29, 39 und 47 sind vorliegend allesamt drahtlos ausgeführt, können bei alternativen Ausführungen aber auch einzeln oder allesamt drahtgebunden ausgeführt sein. Die Übertragungseinrichtungen 14, 29, 39 und 47 können grundsätzlich mittels beliebig auswählbarer Übertragungsprinzipien arbeiten. Beispielsweise können die Übertragungseinrichtungen 14, 29, 39, 47 als Funkübertragungseinrichtung ausgeführt sein. Insbesondere handelt es sich bei den Übertragungseinrichtungen 14, 29, 39 um RFID-Übertragungseinrichtungen, allerdings kann es sich alternativ hierzu beispielsweise auch um Bluetooth-Übertragungseinrichtungen, NFC-Übertragungseinrichtungen, WiFi-Übertragungseinrichtungen, QR-Übertragungseinrichtungen, DMC-Übertragungseinrichtungen, WLAN-Übertragungseinrichtungen, ZigBee-Übertragungseinrichtungen, Wibree-Übertragungseinrichtungen, WiMAX-Übertragungseinrichtungen, IrDA-Übertragungseinrichtungen oder nach optischem Richtfunk arbeitende Übertragungseinrichtungen handeln.

Mittels der Sende- und Empfangseinrichtungen 3, 13, 28, 38 und 46 und/oder der Übertragungseinrichtungen 14, 29, 39 und 47 ist ein Netzwerk des Systems 1 bildbar, das die Kernbohrmaschine 5, die Vorschubeinrichtung 10, die Wassermanagementeinrichtung 25, die Saugeinrichtung 35 und das Mobiltelefon 45 umfasst.

Es ist vorliegend eine mit der Steuer- und Regeleinrichtung 9 verbundene Speichereinrichtung 21 vorgesehen, in der Signale der Hilfsgeräte 10, 25, 35, des Mobiltelefons 45 und der Kernbohrmaschine 5 zumindest temporär speicherbar sind. Die in der Speichereinrichtung 21 gespeicherten Informationen können ausgelesen und ausgewertet werden.

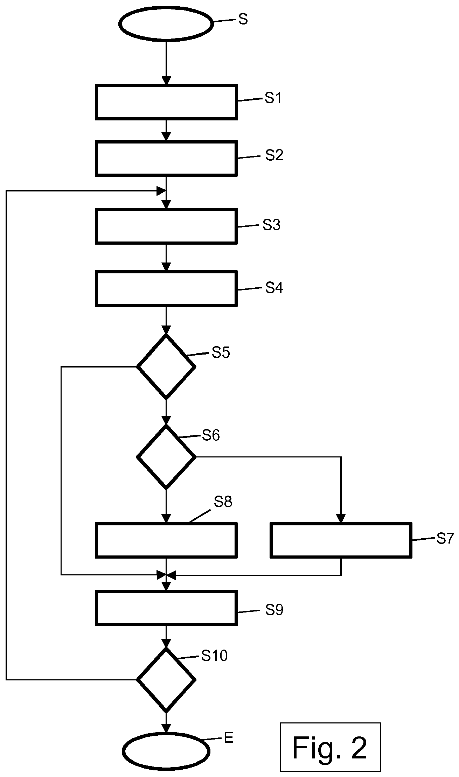

Im Folgenden wird ein Verfahren zum Betreiben des Systems 1 gemäß des in Fig. 2 dargestellten Ablaufdiagramms näher beschrieben.

Das Verfahren beginnt mit dem Start S. Im Schritt S1 wird die Kernbohrmaschine 5 als Master in einem die Kernbohrmaschine 5 und die Hilfsgeräte 10, 25 und 35 aufweisenden Netzwerk ausgewählt. Im vorliegend darauffolgenden Schritt S2 werden sämtliche Hilfsgeräte des Netzwerks und somit die Vorschubeinrichtung 10, die Wassermanagementeinrichtung 25 und die Saugeinrichtung 35 als Slave in dem Netzwerk ausgewählt. Darauffolgend werden im Schritt S3 Signale der Hilfsgeräte 10, 25, 35 und der Kernbohrmaschine 5 an die Steuer- und Regeleinrichtung 9 der Kernbohrmaschine 5 übermittelt, wobei die Signale beispielsweise von den Sensoren 4, 12, 27, 37 ermittelte Parameter repräsentieren. Anschließend werden die Signale und somit insbesondere ein aktuell vorliegender Parametersatz im Schritt S4 mit einer in der Steuer- und Regeleinrichtung 9 hinterlegten Look-Up-Tabelle verglichen oder mittels eines in der Steuer- und Regeleinrichtung 9 hinterlegten Algorithmus ausgewertet und ermittelt, ob eine Änderung wenigstens eines Parameters eines Hilfsgeräts 10, 25, 35 oder der Kernbohrmaschine 5 erforderlich ist. Gegebenenfalls wird eine erforderliche Änderung eines Parameters in der Steuer- und Regeleinrichtung 9 hinterlegt.

Im Schritt S5 wird überprüft, ob ein weiteres Signal von dem Mobiltelefon 45 vorliegt. Bei positivem Abfrageergebnis wird in Schritt S6 überprüft, ob ein Konflikt mit einer in Schritt S4 in der Regeleinrichtung 9 hinterlegten Änderung vorliegt. Liegt ein Konflikt vor, werden die betroffenen Parameter in der Steuer- und Regeleinrichtung 9 in Schritt S7 mit den von dem Mobiltelefon 45 über das weitere Signal übermittelten Parameterwerten überschrieben und gegebenenfalls weitere erforderliche Änderungen an Parametern der Kernbohrmaschine 5 oder den Hilfsgeräten 10, 25, 35 hinterlegt. Im anschließenden Schritt S9 werden die in der Steuer- und Regeleinrichtung 9 hinterlegten Werte in erforderlichem Umfang an der Kernbohrmaschine 5, der Vorschubeinrichtung 10, der Wassermanagementeinrichtung 25 und/oder der Saugeinrichtung 35 eingestellt, wobei hierzu den in der Steuer- und Regeleinrichtung 9 hinterlegten Änderungen entsprechende Signale von der der Sende- und Empfangseinrichtung 3 der Kernbohrmaschine 5 an die jeweiligen Sende- und Empfangseinrichtungen 13, 28, 38 übermittelt werden.

Wird in Schritt S6 festgestellt, dass aufgrund eines von dem Mobiltelefon 45 übermittelten weiteren Signals kein Konflikt mit den in Schritt S4 in der Regeleinrichtung 9 hinterlegten Änderungen vorliegt, werden die durch die weiteren Signale übermittelten erforderlichen Parameteränderungen in Schritt S8 zusätzlich in der Steuer- und Regeleinrichtung 9 hinterlegt. Daraufhin wird mit Schritt S9 fortgefahren und den in der Steuer- und Regeleinrichtung 9 hinterlegten Änderungen entsprechende Signale von der der Sende- und Empfangseinrichtung 3 der Kernbohrmaschine 5 an die jeweiligen Sende- und Empfangseinrichtungen 13, 28, 38 übermittelt.

Wird in Schritt S5 festgestellt, dass keine weiteren Signale des Mobiltelefons 45 vorliegen, wird mit Schritt S9 fortgefahren und direkt den in der Steuer- und Regeleinrichtung 9 hinterlegten Änderungen entsprechende Signale von der der Sende- und Empfangseinrichtung 3 der Kernbohrmaschine 5 an die jeweiligen Sende- und Empfangseinrichtungen 13, 28, 38 übermittelt.

In Abhängigkeit des jeweiligen Anwendungsfalles kann es dazu kommen, dass lediglich durch Signale der Hilfsgeräte 10, 25, 35 oder der Kernbohrmaschine 5 bedingte Änderungen an Parametern vorgenommen werden. In diesem Fall wird im Schritt S9 wenigstens ein Parameter der Kernbohrmaschine 5 in Abhängigkeit des wenigstens einen von dem wenigstens einen Hilfsgerät 10, 25, 35 empfangenen Signals und/oder wenigstens ein Parameter eines Hilfsgeräts 10, 25, 35 in Abhängigkeit des wenigstens einen von diesem Hilfsgerät 10, 25, 35 empfangenen Signals und/oder wenigstens ein Parameter eines Hilfsgeräts 10, 25, 35 in Abhängigkeit des wenigstens einen von einem anderen Hilfsgerät 10, 25, 35 empfangenen Signals eingestellt.

Alternativ hierzu kann es dazu kommen, dass lediglich durch weitere Signale des Mobiltelefons 45 Änderungen an Parametern vorgenommen werden. Schließlich kann es auch dazu kommen, dass Änderungen an Parametern durch eine Kombination aus Signalen der Kernbohrmaschine 5 und/oder der Hilfsgeräte 10, 25, 35 und des Mobiltelefons 45 vorgenommen werden.

Im an den Schritt S9 anschließenden Abfrageschritt S10 wird abgefragt, ob sich zu definierende relevante Rahmenbedingungen in vorgegebenem Umfang geändert haben und beispielsweise neue Signale von einem Hilfsgerät 10, 25 und/oder 35 oder von dem Mobiltelefon 45 vorliegen. Bei positivem Abfrageergebnis wird das Verfahren bei Schritt S3 fortgesetzt. Bei negativem Abfrageergebnis wird das Verfahren bei Schritt E beendet.

Mittels des Verfahrens zum Betreiben des Systems 1 ist auf einfache Weise ein eine große Flexibilität aufweisendes System 1 mit einem Netzwerk geschaffen, welches auch eine Kommunikation der Kernbohrmaschine 5 mit den Hilfsgeräten 10, 25, 35 ohne weitere Signale des Mobiltelefons 45 ermöglicht. Mittels des Mobiltelefons 45 können die insbesondere in der Steuer- und Regeleinrichtung 9 der Kernbohrmaschine 5 hinterlegen Vorgehensweisen auf einfache Weise modifiziert werden, indem durch anwenderseitige Betätigung des Mobiltelefons 45 gewünschte Parameter der Kernbohrmaschine 5 und/oder wenigstens eines Hilfsgeräts 10, 25, 35 vorgegeben und an der Kernbohrmaschine 5 und/oder wenigstens einem Hilfsgerät 10, 25, 35 eingestellt werden. Hierdurch kann auf einfache Weise von in der Steuer- und Regeleinrichtung 9 der Kernbohrmaschine 5 hinterlegten Vorgehensweisen abgewichen werden und diese überschrieben werden.

Die Kernbohrmaschine 5 fungiert somit gegenüber den Hilfsgeräten 10, 25, 35 als Master in dem Netzwerk und gegenüber dem Mobiltelefon 45 vorzugsweise als Slave, wobei die Slavefunktionalität der Kernbohrmaschine 5 von dem Mobiltelefon 45 verwendet wird.

Mittels des oben näher beschriebenen Verfahrens kann mittels des Mobiltelefons 45 auf einfache Weise auf das Netzwerk zugegriffen und Einfluss genommen werden und Dienste des Netzwerks können genutzt werden. Weiterhin können auf einfache Weise neue Anwendungsfälle implementiert werden.

### Bezugszeichenliste

- 1: System
- 3: Sende- und Empfangseinrichtung
- 4: Sensor
- 5: Hauptwerkzeugmaschine; Kernbohrmaschine
- 6: Abtriebswelle
- 7: Bohrwerkzeug
- 8: Schneidekante
- 9: Steuer- und Regeleinrichtung
- 10: Hilfsgerät; Vorschubeinrichtung
- 11: Gehäuse
- 12: Sensor
- 13: Sende- und Empfangseinrichtung
- 14: Übertragungseinrichtung
- 15: Bohrständer
- 16: Fußeinrichtung
- 17: Führungsschiene
- 18: Festlegungseinrichtung
- 19: Zahnstangeneinrichtung
- 21: Speichereinrichtung
- 22: Gehäuse
- 25: Hilfsgerät; Wassermanagementeinrichtung
- 26: Schlauch
- 27: Sensor
- 28: Sende- und Empfangseinrichtung
- 29: Übertragungseinrichtung
- 35: Hilfsgerät; Saugeinrichtung
- 36: Schlauch
- 37: Sensor
- 38: Sende- und Empfangseinrichtung
- 39: Übertragungseinrichtung
- 45: mobiles Gerät; Mobiltelefon
- 46: Sende- und Empfangseinrichtung
- 47: Übertragungseinrichtung
- 48: Benutzerschnittstelle

- A, B: Bewegungsrichtung
- E: Ende
- N: Drehrichtung
- R: Drehachse
- S: Start
- S1 bis S10: Schritt
- W: Untergrund

## Patentansprüche

1. Verfahren zum Betreiben eines eine Hauptwerkzeugmaschine (5), wenigstens ein Hilfsgerät (10, 25, 35) und ein mobiles Gerät (45) umfassenden Systems (1), wobei die Hauptwerkzeugmaschine (5), das wenigstens eine Hilfsgerät (10, 25, 35) und das mobile Gerät (45) jeweils mit einer Sendeeinrichtung und einer Empfangseinrichtung (3, 13, 28, 38, 46) ausgeführt sind, und wobei eine Steuereinrichtung (9) vorgesehen ist,
**dadurch gekennzeichnet, dass** das Verfahren folgende Schritte umfasst:
- Auswählen der Hauptwerkzeugmaschine (5) als Master in einem die Hauptwerkzeugmaschine (5) und das wenigstens eine Hilfsgerät (10, 25, 35) umfassenden Netzwerks (S1);
- Auswählen des wenigstens einen Hilfsgeräts (10, 25, 35) als Slave in dem Netzwerk (S2);
- Senden wenigstens eines Signals von dem wenigstens einen Hilfsgerät (10, 25, 35) an die Hauptwerkzeugmaschine (5) (S3);
- Einstellen wenigstens eines Parameters der Hauptwerkzeugmaschine (5) in Abhängigkeit des wenigstens einen von dem wenigstens einen Hilfsgerät (10, 25, 35) empfangenen Signals (S9) und/oder
- Einstellen wenigstens eines Parameters wenigstens eines Hilfsgeräts (10, 25, 35) in Abhängigkeit des wenigstens einen von diesem Hilfsgerät (10, 25, 35) empfangenen Signals (S9) und/oder
- Einstellen wenigstens eines Parameters wenigstens eines Hilfsgeräts (10, 25, 35) in Abhängigkeit des wenigstens einen von einem anderen Hilfsgerät (10, 25, 35) empfangenen Signals (S9);
- Senden wenigstens eines weiteren Signals von dem mobilen Gerät (45) an die Hauptwerkzeugmaschine (5) (S5); und
- Einstellen wenigstens eines Parameters der Hauptwerkzeugmaschine (5) und/oder wenigstens eines Hilfsgeräts (10, 25, 35) in Abhängigkeit des weiteren Signals von dem mobilen Gerät (45) (S9).

2. Verfahren nach Anspruch 1,
**dadurch gekennzeichnet, dass** das wenigstens eine Signal und/oder das wenigstens eine weitere Signal in einer Speichereinrichtung (21) gespeichert wird.

3. System (1) zur Durchführung des Verfahrens gemäß einem der Ansprüche 1 oder 2, umfassend eine Hauptwerkzeugmaschine (5), wenigstens ein Hilfsgerät (10, 25, 35) und ein mobiles Gerät (45), wobei die Hauptwerkzeugmaschine (5), das wenigstens eine Hilfsgerät (10, 25, 35) und das mobile Gerät (45) jeweils mit einer Sende- und Empfangseinrichtung (3, 13, 28, 38, 46) ausgeführt sind, und wobei eine Steuer- und/oder Regeleinrichtung (9) vorgesehen ist.

4. System nach Anspruch 3,
**dadurch gekennzeichnet, dass** die Sende- und Empfangseinrichtungen (3, 13, 28, 38, 46) der Hauptwerkzeugmaschine (5), des wenigstens einen Hilfsgeräts (10, 25, 35) und/oder des mobilen Geräts (45) Teil einer drahtlosen oder drahtgebundenen Übertragungseinrichtung (14, 29, 39, 47) sind.

5. System nach Anspruch 4 ,
**dadurch gekennzeichnet, dass** wenigstens eine drahtlose Übertragungseinrichtung (14, 29, 39, 47) eine optische Übertragungseinrichtung oder eine Funkübertragungseinrichtung ist und insbesondere als RFID-Übertragungseinrichtung, als Bluetooth-Übertragungseinrichtung, als Bluethooth-Low-Energy-Übertragungseinrichtung, als NFC-Übertragungseinrichtung, als WiFi-Übertragungseinrichtung, als QR-Übertragungseinrichtung, als DMC-Übertragungseinrichtung, als WLAN-Übertragungseinrichtung, als ZigBee-Übertragungseinrichtung, als Wibree-Übertragungseinrichtung, WiMAX-Übertragungseinrichtung, als LoRa-Übertragungseinrichtung, als IrDA-Übertragungseinrichtung oder als nach optischem Richtfunk arbeitende Übertragungseinrichtung ausgeführt ist.

6. System nach einem der Ansprüche 3 bis 5,
**dadurch gekennzeichnet, dass** die Hauptwerkzeugmaschine (5) eine Kernbohrwerkzeugmaschine oder eine Wandsägemaschine ist.

7. System nach einem der Ansprüche 3 bis 6,
**dadurch gekennzeichnet, dass** ein Hilfsgerät eine Vorschubeinrichtung (10) für die Hauptwerkzeugmaschine (5), eine Unterdruckpumpe, eine Saugeinrichtung (25) oder eine Wassermanagementeinrichtung (35) ist.

8. System nach einem der Ansprüche 3 bis 7,
**dadurch gekennzeichnet, dass** das mobile Gerät (45) eine Fernsteuereinrichtung oder ein Mobiltelefon ist.
